# EUROPEAN PATENT SPECIFICATION

(11) **EP 1 973 401 B1**
(45) Date of publication and mention of the grant of the patent: **02.07.2014**
(21) Application number: 07700250.9
(22) Date of filing: 04.01.2007
(51) Int. Cl.: A01N 25/02

(54) **SOLVENT MIXTURE FOR PREPARING WATER-DILUTABLE LIQUID CONCENTRATE FORMULATION OF ORGANIC PESTICIDE COMPOUNDS**
LÖSUNGSMITTELMISCHUNG FÜR DIE HERSTELLUNG EINER MIT WASSER VERDÜNNBAREN FLÜSSIGEN KONZENTRATFORMULIERUNG VON ORGANISCHEN PESTIZIDVERBINDUNGEN
MELANGE DE SOLVANTS POUR LA PREPARATION D'UNE FORMULATION DE CONCENTRE LIQUIDE DILUABLE DANS L'EAU DE COMPOSES PESTICIDES ORGANIQUES

(30) Priority: 05.01.2006 US 756302 P
(43) Date of publication of application: 01.10.2008
(73) Proprietor: BASF SE, 67056 Ludwigshafen (DE)
(72) Inventor: BYRNE, Tom, Raleigh, NC 27613 (US); FINCH, Charles, W., Garner, NC 27529 (US)
(86) International application number: PCT/EP2007/050066
(87) International publication number: WO 2007/077246

(56) References cited:
- EP-A2- 0 189 588
- WO-A-01/26461
- WO-A-02/17722
- JP-A- 2000 143 410
- DATABASE WPI Week 200543 Derwent Publications Ltd., London, GB; AN 2005-421629 XP002447705 & JP 2005 154344 A (HOKKO CHEM IND CO LTD) 16 June 2005 (2005-06-16)

## Description

The present invention relates to water-dilutable liquid concentrate formulations, which comprise a solvent mixture SM and at least one non-ionic surfactant, wherein the solvent mixture SM is useful for preparing a water-dilutable liquid concentrate formulation of sparingly soluble organic pesticide compounds C having a water solubility of not more than 5 g/l at 25°C/1013 mbar.

Organic pesticide compounds, hereinafter also referred to as active ingredients or actives, are usually applied in the form of a dilute aqueous preparation in order to achieve a good interaction with the target organisms, such as plants, fungi, nematodes and arthropod pests such as insects and acarids. However, most active ingredients that are used as pesticides are only sparingly or even insoluble in water, i.e. they usually have a water-solubility of not more than 5 g/l, often not more than 1 g/l and particularly not more than 0.1 g/l at 25°C/1013 mbar. Therefore, formulators are often confronted with difficulties in formulating pesticide compounds in stable formulations that can be easily diluted with water and that deliver maximum loading of the active ingredient per unit volume to the end user.

There are several approaches to preparing concentrated formulations with pesticide compounds having limited water solubility, including solid formulations, such as wettablye dispersible granule (WDG's) oder wettable powders (WPD's), and liquid formulations such as suspension concentrates (SC's) and supsoemulsion concentrates (SEC's), emulsifyables (EC's) and emulsions (EW's).

Although solid formulations are attractive not only from a loading delivery viewpoint, but also from a handling and/or worker safety viewpont, not all agrochemicals can be formulated in solid formulations. Therefore liquid formulations have gained in importance.

Suspension concentrates are liquid formulations, wherein the active ingredient is present in the form of finely divided solid particles, which are suspended in an aqueous dispersing medium utilizing surface-active compounds, such as wetting agents, dispersants and rheological or suspending aids for stabilising the active ingredient particles in the dispersing medium. In SC's, the particles of the active ingredient usually have particle sizes in the range of 1 to 20 µm. Even smaller particle sizes, i.e. < 1 µm, e.g. 0.5 to < 1 µm, can be obtained by elaborate grinding techniques. However, problems are often encountered with SC's as a result of settling during prolonged storage or storage at elevated temperatures, the resistance of settled particles to resuspension and the formation of crystalline material upon storage. As a consequence, the formulations are difficult to handle and the bioefficacy may be inconsistent. Moreover, since the particle size of the active ingredient particles is large in SC's, they may often result in a lower efficacy. Suspoemulsion concentrates are similar to suspension concentrates, however they additionally contain solution of the active in a water-immiscible solvent, the solution being present in the form of small droplets which are emulsified in the aqueos phase. Due to the presence of three phases, SEC's are often instable. Moreover, the containe noticeable amounts of water-immiscible organic solvents, which are not entirely satisfactory with regard to their ecological and toxicological properties

In an EC, the active ingredient is dissolved in a water-immiscible solvent (solubility usually < 0:1 g/l), frequently in hydrocarbon solvents including aromatic hydrocarbons, together with surfactants. Generally, EC's are stable solutions that can be diluted with water to form a milky oil-in-water emulsion, containing the active ingredient dissolved in the solvent droplets. EC formulations have a considerable drawback in that they contain considerable amounts of volatile organic solvents which are not entirely satisfactory with regard to their ecological and toxicological properties. Moreover, EC's are limited to pesticide compounds which are soluble in water-immiscible solvents. As a result of the large particle size of the solvents droplets, the bioefficacy of the active ingredient is sometimes not satisfactory.

In an EW, a liquid pesticide is emulsified in water by means of surfactant. Upon dilution with water the EW's overcome some of the drawbacks associated with EC's, since they contain no solvents, or only small amounts. On the other hand, they are limited to liquid active ingredients which must also be stable to hydrolysis.

In recent years, microemulsions and microdispersions of pesticide compounds have been described. In microemulsions or microdispersions, respectively, the active ingredient is dispersed in the aqueous phase in the form of particles or droplets having a particle size in the submicron scale, frequently an average particle size of 200 nm or below. Microemulsions are generally achieved by means of a suitable combination of surfactant and co-surfactant, the latter usually comprising a water miscible solvent such as an alcohol, an alkyl pyrrolidone or a lactone such as γ-butyrolactone, optionally in combination with water-immiscible solvents. Microemulsions as well as microdispersions are generally obtained by diluting a solution of the active ingredient, dissolved in a mixture of surfactant and co-surfactant. However, dilution stability of such concentrate formulations is often insufficient, i.e. the sparingly water-soluble active ingredient tends to segregate upon or after dilution with water, in particular, when the formulation is highly loaded with the active ingredient.

Another major problem associated with liquid concentrate formulations is that they may cause irritation of eyes.

WO 88/09122 describes microemulsions of (thio)phosphoric ester insecticides comprising a non-ionic surfactant and a co-surfactant selected from alcohols, ketones and esters of aliphatic acids.

WO 99/65301 describes a microdispersion consisting essentially of a dispersed phase of the active ingredient having a particle size below 500 nm, a surfactant and a cosurfactant, such as polyhydric alcohols, lactames, lactones and the like.

JP 2000 143410 discloses a composition comprising a halocyanoacetamide, 3,3,4,4-tetrachlorotetrahydrothiophene 1,1-dioxide, an alkylene glycol and propylene carbonate. The composition is reported to be useful for antimicrobial applications.

JP 2005 154344 discloses liquid agrochemical formulations containing propylene carbonate, water, glycols and/or glycol ethers, and in addition the active ingredient kasugamycin which is highly soluble in water.

WO 01/26461 discloses liquid formulations of insecticidal compounds of low water-solubility. Besides the insecticide the formulations also comprise propylene carbonate and/or ethylene carbonate, and an emulsifier.

EP 0 189 588 discloses a herbicidal mixture comprising tebutam as herbicidal agent, wherein the solvent used to prepare the mixture mainly consists of propylene carbonate.

WO 02/17722 discloses water-emulsifiable compositions of the insecticides diazinon, malathion or endosulfan that comprise an organic carbonate such as propylene carbonate as solvent.

WO 02/45507 describes a microemulsifiable concentrate formulation of a hydrophobic pesticide compound, wherein the active ingredient and at least one surfactant are dissolved in a solvent system comprising hydrophobic, water insoluble alkylalkanoates as a first solvent and polyhydric alcohols or condensates of polyhydric alcohols as a second solvent. The formulations are reported to exhibit reduced eye irritation.

WO 2006/002984 discloses liquid pesticide concentrate formulations of water-insoluble pesticide compounds having both improved storage and dilution stability. The formulations comprise at least one pesticide compound, at least one organic solvent having a water solubility of at least 10 g/l and at least one non-ionic blockcopolymer comprising at least one polyethylene oxide moiety and at least one hydrophobic polyether moiety. The problem of eye irritation is not addressed therein.

There is an ongoing need to provide means for preparing stable formulations of sparingly water-soluble or water-insoluble pesticide compounds, which, upon dilution with water provide stable preparations of the pesticide compounds, in particular preparations, where the pesticide compounds are present in the form of fine particles or droplets having very small diameters of below 500 nm. Moreover, the formulation should not cause severe eye irritation.

The inventors of the present invention surprisingly found out that these and further objects can be solved by a solvent mixture comprising:
i) at least one C₂-C₄-alkylene glycol and
ii) at least one C₂-C₄-alkylene carbonate
wherein the components i) and ii) make up at least 90 % of the solvent mixture.

These solvent mixtures SM are suitable for preparing water-dilutable liquid concentrate formulations of sparingly water-soluble or even water-insoluble organic pesticide compounds C and in particular for reducing the risk of eye irritation caused by liquid pesticide formulations of such pesticide compounds.

The solvent mixture SM allows the preparation of water-dilutable liquid concentrate formulations of sparingly soluble or insoluble pesticide compounds, the formulations showing high dilution stability, even at high loads with pesticide compounds. Moreover both the concentrated formulations and the diluted preparations are storage stable, i.e. a noticeable segregation of active materials does not occur.

Therefore, the present invention also relates to water-dilutable liquid concentrate formulations of an organic pesticide compound C having a water solubility of not more than 5 g/l at 25°C/1013 mbar, which comprises
a) at least one organic pesticide compound C having a water solubility of not more than 5 g/l at 25°C/1013 mbar,
b) a solvent mixture SM which comprises
   i) at least one C₂-C₄-alkylene glycol and
   ii) at least one C₂-C₄-alkylene carbonate
   wherein the components i) and ii) make up at least 90% of the solvent mixture, or a mixture thereof with water, provided provided that the weight ratio of water to solvent-mixture SM does not exceed 1:2,
c) at least one surfactant S, which comprises at least one non-ionic blockcopolymer P, comprising at least one polyethyleneoxide moiety PEO and at least one polyether moiety PAO consisting of repeating units derived from C₃-C₁₀-alkyleneoxides and/or styrene oxide;
wherein the components a), b) and c) make up at least 90%, in particular at least 95% by weight, based on the total weight of the formulation.

In general, the formulations of the present invention are virtually homogeneous mixtures, i.e. no particles can be observed. The formulations of the invention are stable against formation of solids upon storage and can be easily diluted with water without the formation of coarse material, even when they are highly loaded with the pesticide compund C. Surprisingly chemical degradation of some active ingredients having chemically labile groups, such as hydrazones, semicarbazones, urethanes, sulfonyl ureas, amidosulfonylamides, oxime ethers, phosphonic esters, phosphate esters, and the like is decreased in comparison with other solvent based concentrate formulations.

Upon dilution with water, the formulations of the present invention form a bluish or even clear emulsion or dispersion, indicating that the droplets/solids dispersed therein are of very small size, i.e the average particle diameters do not exceed 500 nm. Preferably they do not exceed 300 nm, in particular they do not exceed 200 nm. The average particle diameters as referred herein, are weight average particle diameters which can be determined by dynamic light scattering. A skilled person is familiar with these methods which are e.g. described in H. Wiese (D. Distler, Ed.), Aqueous Polymer Dispersions (Wässrige Polymerdispersionen), Wiley-VCH 1999, Chapter 4.2.1, p. 40ff, and the literature cited therein; H. Auweter, D. Horn, J. Colloid Interf. Sci. 105 (1985), p. 399; D. Lilge, D. Horn, Colloid Polym. Sci. 269 (1991), p. 704; and H. Wiese, D. Horn, J. Chem. Phys. 94 (1991), p. 6429.

Surprisingly the aqueous preparations, that are obtained by diluting the liquid pesticide formulation of the invention with water, have enhanced physical stability, i.e. the formation of solids during dilution and after 24 h or 48 h after dilution is not observed. In particular, noticeable segregation of solids is not observed even after 7 d or 14 d at room temperature. Moreover chemical degradation in the diluted preparations of labile active ingredients such as sulfonyl ureas, hydrazones and the like, e.g. by hydrolysis, is decreased. Surprisingly, the liquid formulations result in an improved biological performance of the active ingredients:

Suitable C₂-C₄-alkylene glycoles of the solvent mixture SM include glycol (1,2-ethandiol or ethyleneglycol), propandiol (propyleneglycol), including 1,2-propandiol, 1,3-propandiol and mixtures thereof, and 1,4-butandiol with preference given to propandiol.

Suitable C₂-C₄-alkylene carbonates of the solvent mixture SM include ethylene carbonate (2-oxa-1,3-dioxolan) and propylene carbonate (2-oxa-1,3-dioxan) with preference given to the latter.

In a very preferred embodiment of the invetion, the C₂-C₄-alkylene glycol is propandiol and the C₂-C₄-alkylene carbonate is propylene carbonate.

In the solvent mixture SM, the weight ratio of C₂-C₄-alkylene glycol to C₂-C₄-alkylene carbonate (i.e. the weight ratio i : ii) may vary from 10:1 1 to 1:10, preferably from from 8:1 to 1:2, in particular from 6:1 to 1:1 and more preferably from 5:1 to 2:1.

According to the present invention, the total amount of C₂-C₄-alkylene glycol and C₂-C₄-alkylene carbonate makes up at least 90% by weight, in particular at least 95% by weight of the total weight of the solvent mixture SM. However, the solvent mixture SM may contain small amounts, i.e. 10% by weight or less, preferably not more than 5% weight, based on the total weight of the formulation, of other liquid constituents, such as water or organic solvents, different from C₂-C₄-alkylene glycols and C₂-C₄-alkylene carbonates. Preferably, the amount of other organic solvents does not exceed 5% by weight, more preferably 1 % by weight, based on the total weight of the solvent mixture. The amount of water preferably does not exceed 10% by weight, in particular 5% by weight, and frequently ranges from 0.01 to 10% by weight, in particular from 0.1 to 5% by weight, based on the total weight of the solvent mixture.

The term "organic solvent, different from C₂-C₄-alkylene glycols and C₂-C₄-alkylene carbonates", as used herein, refers to low molecular weight organic substances having a molecular weight preferably of not more than 300 Dalton, in particular of not more than 200 Dalton and includes C₁-C₈ alkanols and C₅-C₈ cycloalkanols, polyhydric alcohols other than C₂-C₄-alkylene glycol, C₂-C₄-alkylene glycol monomethyl ethers, cyclic ethers, di- and tri-C₂-C₄-alkylene glycols and their monomethyl, monoethyl- and dimethyl ethers, ketones having from 3 to 8 C-atoms lactones having from 3 to 8 C-atoms, carbonates other than C₂-C₄-alkylene carbonates, organic acids having from 1 to 3 carbon atoms, amides, n-C₁-C₈-alkylamides and N,N-C₁-C₂-dialkylamides of C₁-C₄-aliphatic acids in particular of formic acid, acetic acid or lactic acid, C₂-C₄-alkanolamines, C₂-C₄-dialkanolamines and C₂-C₄-trialkanolamines, and lactames, having preferably from 3 to 6 carbon atoms and their N-methyl and N-ethyl derivatives.

The formulations of the present invention contain the solvent mixture SM usually in amounts from 10 to 80% by weight, preferably from 20 to 70% by weight and in particular from 30 to 60% by weight. In case the liquid pesticide formulation contains a mixture of water and solvent mixture SM the total amount of solvent mixture SM + water preferably ranges from 20 to 70% by weight and in particular 30 to 60% by weight. The relative amount of water and solvent mixture W:SM in the formulation preferably does not exceed 1:3, in particular 1:4 more preferably 1:5, in particular 1:10. The total amount of water in the formulations of the present invention usually does not exceed 10% by weight in particular 5% by weight, and is often less or equal to 2% by weight, based on the total weight of the formulation.

The formulations of the invention also comprise at least one organic pesticide compound C which is sparingly soluble or insoluble in water. Preferably the solubility is below 0.5 g/I and in particular below 0.1 g/l at 25°C and 1013 mbar.

The concentration of the pesticide compound in the formulation will be generally at least 1% by weight, and is frequently at least 5% by weight, preferably at least 10% by weight, in particular at least 15% by weight, based on the total weight of the formulation. The formulation can be loaded with active ingredients in amounts up to 70% by weight, preferably up to 60% by weight, in particular up to 50% by weight, more preferably up to 40% by weight, based on the total weight of the formulation. The concentration of the pesticide compound in the formulation will frequently be from 1 to 60% by weight, preferably from 5 to 50% by weight, in particular from 10 to 40% by weight or 15 to 40% by weight, based on the total weight of the formulation.

The pesticide compound C can be selected from each group of active ingredients which are used to protect plants/crops from attack or infestation by harmful organisms, i.e. the pesticide compound can be selected from acaricides, antifeedants, avicides, algicides, bactericides, bird repellents, chemosterilants, fungicides, herbicides, herbicide safeners, insect attractants, insect repellents, insecticides, mammal repellents, mating disrupters, molluscicides, nematicides, plant activators, plant growth regulators, rhodenticides, synergists, virucides and other compounds with exert an action on the plants to be protected and/or against the harmful organism.

Preferably, the at least one pesticide compound C has a solubility in the solvent mixture SM, or in the mixture of the solvent mixture SM and the surfactant S, respectively, of at least 10 g/l, in particular at least 20 g/I and more preferably at least 50 g/l (at 25°C and 1 bar). Prefered pesticide compounds C have a defined molecular structure, i.e. they can be described by one structural formula, including diastereomers, diastereomeric mixtures, entantiomers, enantiomeric mixtures or tautomers or mixtures of tautomers. The molecular weight of preferred compounds C will usually range from 100 to 600 dalton.

Examples of suitable pesticide compounds C which act as fungicides are for example:
- acylalanine, such as benalaxyl, metalaxyl, ofurace, oxadixyl;
- amine derivatives, such as aldimorph, dodine, dodemorph, fenpropimorph, fenpropidin, guazatine, iminoctadine, spiroxamin, tridemorph;
- anilinopyrimidine, such as pyrimethanil, mepanipyrim or cyrodinyl;
- antibiotics, such as cycloheximid, griseofulvin, kasugamycin, natamycin, polyoxin und streptomycin;
- azoles, such as bitertanol, bromuconazol, cyproconazole, difenoconazol, dinitroconazol, epoxiconazol, fenbuconazol, fluquiconazol, flusilazol, flutriafol, hexaconazol, imazalil, ipconazol, metconazol, myclobutanil, penconazol, propiconazol, prochloraz, prothioconazol, tebuconazol, tetraconazol, triadimefon, triadimenol, triflumizol, triticonazol;
- 2-methoxybenzophenones, e.g. those disclosed in EP-A 897 904 by the general formula I, e.g. metrafenon;
- dichlorophenyl dicarboximides, such as chlozolinate, dichlozoline, isovaledione, iprodione, myclozolin, procymidone, vinclozolin;
- dithiocarbamates, such as ferbam, nabam, maneb, mancozeb, metam, metiram, propineb, polycarbamat, thiram, ziram, zineb;
- heterocyclic compounds, such as anilazine, benomyl, boscalid, carbendazim, • carboxin, oxycarboxin, cyazofamid, dazomet, dithianon, famoxadon, fenamidon, fenarimol, fuberidazoles, flutolanil, furametpyr, isoprothiolanes, mepronil, nuarimol, picobezamid, probenazoles, proquinazid, pyrifenox, pyroquilon, quinoxyfen, silthiofam; thiabendazole, thifluzamid, thiophanat-methyl, tiadinil, tricyclazoles, triforine;
- nitrophenyl derivatives, such as binapacryl, dinocap, dinobuton, nitrophthal-isopropyl;
- phenylpyrroles, such as fenpiclonil and fludioxonil;
- non-classified fungicides, such as acibenzolar-S-methyl, benthiavalicarb, carpropamid, chlorothalonil, cyflufenamid, cymoxanil, diclomezin, diclocymet, diethofencarb, edifenphos, ethaboxam, fenhexamid, fentin-acetat, fenoxanil, ferimzones, fluazinam, fosetyl, fosetyl-aluminum, iprovalicarb, hexachlorobenzol, metrafenon, pencycuron, propamocarb, phthalides, toloclofos-methyl, quintozenes, zoxamid;
- strobilurines, e.g. the compounds disclosed in WO 03/075663 by the general formula I, such as azoxystrobin, dimoxystrobin, fluoxastrobin, kresoxim-methyl, metominostrobin, orysastrobin, picoxystrobin, pyraclostrobin and trifloxystrobin;
- sulfenic acid derivatives, such as captafol, captan, dichlofluanid, folpet, tolylfluanid;
- cinnamic acid amides and analoga, such as dimethomorph, flumetover, flumorp;
- 6-aryl-[1,2,4]triazolo[1,5-a]pyrimidines, e.g. those disclosed in WO 98/46608, WO 99,41255 or WO 03/004465 by the general formula I;
- amido fungicides, such as cyclofenamid and (Z)-N-[α-(cyclopropylmethoxyimino)-2,3-difluoro-6-(difluoromethoxy)benzyl]-2-phenylacetamid.

Examples of pesticide compounds C which act as herbicides or herbicide safeners comprise
- 1,3,4-thiadiazoles, such as buthidazoles und cyprazoles;
- amides, such as allidochlor, benzoylpropethyl, bromobutide, chlorthiamid, dimepiperate, dimethenamid, diphenamid, etobenzanid, flampropmethyl, fosamin, isoxaben, metazachlor, monalide, naptalame, pronamid, propanil;
- aminophosphoric acids, such as bilanafos, buminafos, glufosinateammonium, glyphosates, sulfosates;
- aminotriazoles, such as amitrol, anilide, anilofos, mefenacet;
- aryloxyalkanoic acids, such as 2,4-D, 2,4-DB, clomeprop, dichlorprop, dichlorprop-P, dichlorprop-P, fenoprop, fluroxypyr, MCPA, MCPB, mecoprop, mecoprop-P, napropamides, napro-panilides, triclopyr, and the C₁-C₈-alkyl esters, e.g. the ethyl or butyl esters, the C₁-C₄-alkoxy-C₁-C₄-alkyl esters, e.g. the 2-ethoxyethyl esters or 2-butoxyethyl esters, and the mono-, di- and tri-C₁-C₈-alkyl ammonium salts, in particular the triethyl ammonium salts of aryloxyalkanoic acids;
- benzoic acids, such as chloramben, dicamba and the C₁-C₈-alkyl esters, e.g. the ethyl or butyl esters, the C₁-C₄-alkoxy-C₁-C₄-alkyl esters, e.g. the 2-ethoxyethyl esters or 2-butoxyethyl esters, and the mono-, di- and tri-C₁-C₈-alkyl ammonium salts, in particular the triethyl ammonium salts of benzoic acids;
- benzothiadiazinones, such as bentazon;
- bleachers, such as clomazone, diflufenican, fluorochloridones, flupoxam, fluridone, pyrazolates, sulcotrione;
- carbamates, such as carbetamid, chlorbufam, chlorpro-pham, desmedipham, phenmedipham, vernolate;
- quinolinic acids, such as quinclorac, quinmerac;
- dichloropropionic acids, such as dalapon;
- dihydrobenzofuranes, such as ethofumesates;
- dihydrofuran-3-ones, such as flurtamone;
- dinitroanilines, such as benefin, butralin, dinitramin, ethalfluralin, fluchloralin, isopropalin, nitralin, oryzalin, pendimethalin, prodiamines, profluralin, trifluralin, dinitrophenoles, such as bromofenoxim, dinoseb, dinoseb-acetate, dinoterb, DNOC, minoterb-acetate;
- diphenylether, such as acifluorfen-sodium, aclonifen, bifenox, chlornitrofen, difenoxuron, ethoxyfen, fluorodifen, fluoroglycofen-ethyl, fomesafen, furyloxyfen, lactofen, nitrofen, nitrofluorfen, oxyfluorfen;
- imidazoles, such as isocarbamid;
- imidazolinones, such as imazamethapyr, imazapyr, imazaquin, imazethabenz-methyl, imazethapyr, imazapic, imazamox;
- oxadiazoles, such as methazole, oxadiargyl, oxadiazon;
- oxiranes, such as tridiphane;
- phenoles, such as bromoxynil, ioxynil;
- phenoxyphenoxypropionic acid esters, such as clodinafop, cyhalofop-butyl, diclofop-methyl, fenoxaprop-ethyl, fenoxaprop-p-ethyl, fenthiapropethyl, fluazifop-butyl, fluazifop-p-butyl, haloxyfop-ethoxy-ethyl, haloxyfop-methyl, haloxyfop-p-methyl, isoxapyrifop, propaquizafop, quizalofop-ethyl, quizalofop-p-ethyl, quizalofop-tefuryl;
- phenylacetic acids and their esters, such as chlorfenac;
- phenylpropionic acids and their esters, such as chlorophenprop-methyl;
- ppi-active ingredients, such as benzofenap, flumiclorac-pentyl, flumioxazin, flumipropyn, flupropacil, pyrazoxyfen, sulfentrazone, thidiazimin;
- pyrazoles, such as nipyraclofen;
- pyridazines, such as chloridazon, maleic hydrazide, norflurazon, pyridate;
- pyridincarbonic acids, such as clopyralid, dithiopyr, picloram, thiazopyr;
- pyrimidylethers, such as pyrithiobac acid, pyrithiobac-sodium, KIH-2023, KIH-6127;
- sulfonamides, such as flum.etsulam, metosulam;
- triazolcarboxamides, such as triazofenamid;
- uraciles, such as bromacil, lenacil, terbacil;
- further benazolin, benfuresate, bensulide, benzofluor, bentazon, butamifos, cafenstroles, chlorthal-dimethyl, cinmethylin, dichlobenil, endothall, fluorbentranil, mefluidide, perfluidones, piperophos, topramezone and prohexandion-calcium;
- urea herbicides, such as benzthiazuron, cumyluron, cycluron, dichloralylurea, diflufenzopyr, isononuron, isouron, methabenzthiazuron, monisuron, noruron;
- phenylurea herbicides, such as anisuron, buturon, chlorbromuron, chloreturon, chlorotoluron, choroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluron, phenobenzuron, siduron, tetrafluoron;
- sulfonyl ureas, such as amidosulfuron, azimsulfuron, bensulfuron-methyl, chlorimuron-ethyl, chlorsulfuron, cinosulfuron, cyclosulfamuron, ethametsulfuron-methyl, flazasulfuron, halosulfuron-methyl, imazosulfuron, metsulfuron-methyl, nicosulfuron, primisulfuron, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron;
- plant protection active ingredients, type cyclohexanone, such as alloxydim, clethodim, cloproxydim, cycloxydim, sethoxydim and tralkoxydim. Most preferred herbicidal active ingredients type cyclohexenone are: tepraloxydim (see AGROW, no. 243, 3.11.95, page 21, caloxydim) and 2-(1-[2-{4-Chlorphenoxy}propyl-oxyimino]butyl)-3-hydroxy-5-(2H-tetrahydrothiopyran-3-yl)-2-cyclohexen-1-on and type sulfonyl urea: N-(((4-methoxy-6-[trifluormethyl]-1,3,5-triazin-2-yl)amino)carbonyl)-2-(trifluormethyl)-benzolsulfonamid.

examples for pesticide compounds C which are useful as insecticides, acaricides, nematicides and/or miticides comprise:
- Organo(thio)phosphates, e.g.
   acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- Carbamates, e.g.
   alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- Pyrethroids, e.g.
   allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin;
- Insect growth regulators (IGR's), e.g.
   a) chitin synthesis inhibitors: benzoylureas such as chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine;
   b) ecdysone antagonists, such as halofenozide, methoxyfenozide, tebufenozide, azadirachtin;
   c) juvenoids, such as pyriproxyfen, methoprene, fenoxycarb;
   d) lipid biosynthesis inhibitors, such as spirodiclofen, spiromesifen, a tetronic acid derivative as described in WO 98/05638 in particular spirotetramat,
- Neonicotinoids (i.e. Nicotinic receptor agonists/antagonists), e.g.
   clothianidin, dinotefuran, imidacloprid, thiamethoxam, nitenpyram, acetamiprid, thiacloprid, the thiazol compound of formula Γ¹ 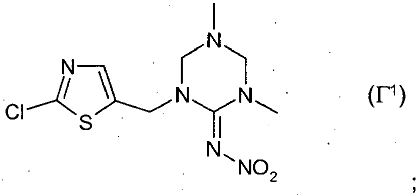
- GABA antagonist compounds, e.g.
   acetoprole, endosulfan, ethiprole, fipronil, vaniliprole pyrafluprole, pyriprole, the phenylpyrazole compound of formula Γ² 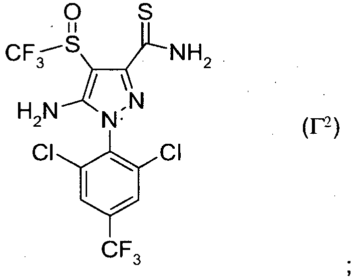
- compounds of the formula I 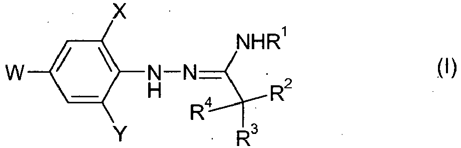
   wherein X and Y are each independently halogen, in particular chlorine;
   W is halogen or C₁-C₂-haloalkyl, in particular trifluoromethyl;
   R¹ is C₁-C₆-alkyl, C₂-C₆-alkenyl, C₂-C₆-alkynyl, C₁-C₄-alkoxy-C₁-C₄-alkyl or C₃-C₆-cycloalkyl each of which may be substituted with 1, 2, 3, 4 or 5 halogen atoms; in particular R¹ is methyl or ethyl;
   R² and R³ are C₁-C₆-alkyl, in particular methyl, or may form together with the adjacent carbon atom a C₃-C₆-cycloalkyl moiety, in particular a cyclopropyl moiety, which may carry 1, 2 or 3 halogen atoms, examples including 2,2-dichlorocyclopropyl,and 2,2-dibromocyclopropyl; and R⁴ is hydrogen or C₁-C₆-alkyl, in particular hydrogen methyl or ethyl;
   and the agriculturally acceptable salts thereof; and
- Macrocyclic lactone insecticides: abamectin, emamectin; milbemectin, lepimectin, spinosad;
- METI I compounds: fenazaquin, pyridaben, tebufenpyrad, tolfenpyrad, flufenerim;
- METI II and III compounds: acequinocyl, fluacyprim, hydramethylnon;
- Uncoupler compounds: chlorfenapyr;
- Oxidative phosphorylation inhibitor compounds: cyhexatin, diafenthiuron, fenbutatin oxide, propargite;
- Moulting disruptor compounds: cyromazine;
- Mixed Function Oxidase inhibitor compounds: piperonyl butoxide;
- Sodium channel blocker compounds: indoxacarb, and compounds of the formula II as described hereinafter, such as metaflumizone,
- Various: benclothiaz, bifenazate, cartap, flonicamid, pyridalyl, pymetrozine, sulfur, thiocyclam, flubendiamide, cyenopyrafen, flupyrazofos, cyflumetofen, amidoflumet;
- compounds of the formula II, 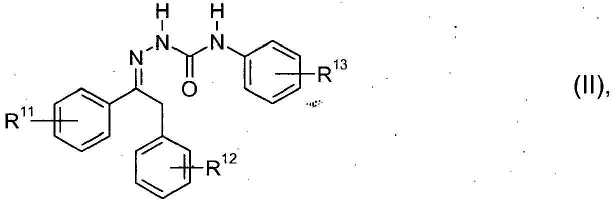 wherein R¹¹ and R¹² are each independently hydrogen, halogen, CN, C₁-C₄ alkyl, C₁-C₄ alkoxy, C₁-C₄ haloalkyl or C₁-C₄ haloalkoxy and R¹³ is C₁-C₄ alkoxy, C₁-C₄ haloalkyl or C₁-C₄ haloalkoxy, R¹² being preferably CN, R¹¹ being preferably C₁ haloalkyl, in particular trifluoromethyl, R¹³ being preferably C₁-haloalkoxy, in particular trifluoromethoxy, e.g. metaflumizone ((EZ)-2'-[2-(4-cyanophenyl)-1-(a,a,a-trifluoro-m-tolyl)ethylidene]-4-(trifluoro-methoxy)carbanilohydrazide (UIPAC) or 2-[2-(4-cyanophenyl)-1-[3-(trifluoromethyl)phenyl]ethylidene]-N-[4-(trifluoromethoxy)phenyl]hydrazine-carboxamide (CAS), respectively);
- Aminoisothiazoles of the formula 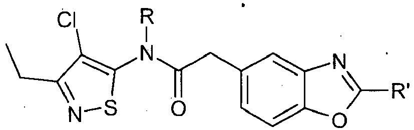 wherein
   R = -CH₂O CH₃ or H and
   R' = -CF₂CF₂CF₃;
- Anthranilamides of the formula 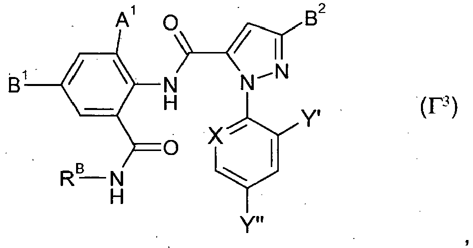 wherein A¹ is CH₃, Cl, Br, I, X is C-H, C-Cl, C-F or N, Y' is F, Cl, or Br, Y" is F, Cl, CF₃, B¹ is hydrogen, Cl, Br, I, CN, B² is Cl, Br, CF₃, OCH₂CF₃, OCF₂H, and R^{B} is hydrogen, CH₃ or CH(CH₃)₂, malononitrile compounds as described in JP 2002 284608, WO 02/89579, WO 02/90320, WO 02/90321, WO 04/06677, WO 04/20399, or JP 2004 99597.
- and compounds of the formulae

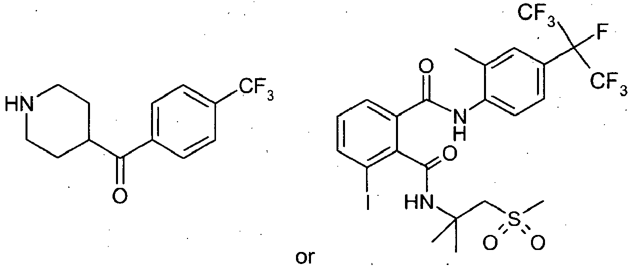

Examples of plant growth regulators comprise gibberellines and oximes, such as {[(isopropylidene)amino]oxy}acetic acid-2-methoxy-2-oxoethyl ester, and also defoliants, such as thidiazuron, growth inhibitors, such as butralin, flumetralin, fluoridamid, prohydrojasmon, growth retardants, such as paclobutrazol, uniconazole, growth stimulators, such as brassinolide, forchlorfenuron and the like.

In a preferred embodiment of the formulations of the present invention the pesticide compound C comprises at least one compound, which is active against arthropod pests such as insects and acarids (hereinafter also referred to as insecticide compound).

A particularly preferred embodiment relates to pesticide formulations which comprise a pesticide compound C which is selected from compounds of formula I, in particular compounds of the formula I, wherein X and Y are chlorine, Z is trifluoromethyl, R¹ is methyl or ethyl, R² and R³ are methyl, or R² and R³ together with the adjacent carbon atom are 2,2-dichlorocyclopropyl or 2,2-dibromocyclopropyl and R⁴ is hydrogen, methyl or ethyl.

A further particularly preferred embodiment relates to pesticide formulations which comprises a compound of the formula II as defined above, in particular metaflumizone (compound of the formula II wherein R¹¹ is 3-CF₃ and R¹² is 4-CN and R¹³ is 4-OCF₃).

In another preferred embodiment of the formulations of the present invention the pesticide compound C comprises at least one fungicide compound, in particular a fungicide compound which is selected from strobilurines, such as azoxystrobin, dimoxystrobin, fluoxastrobin, kresoxim-methyl, metominostrobin, orysastrobin, picoxystrobin, pyraclostrobin or trifloxystrobin, azol fungicides, in particular conazoles such as epoxyconazole, tebuconazole, triticonazole, fluquinconazole, flutriafol, metconazole, myclobutanil, cycproconazole, prothioconazole and propiconazole, boscalid, dichlorophenyl dicarboximides such as vinclozoline and 6-aryl-[1,2,4]triazolo[1,5-a]pyrimidines, e.g. those disclosed in WO 98/46608, WO 99/41255 and WO 03/004465.

Besides the at least one organic pesticide compound C, the solvent mixture SM and water, the formulations according to the present invention contain at least one surfactant which comprise at least one non-ionic blockcopolymer P as defined herein. The term "surfactant" as used herein is well known in the art and includes any organic substance which is capable of reducing the surface tension of a phase boundary between an organic phase and an aqeuos phase. Suitable surfactants include non-polymeric surfactants and polymeric surfactants. The term "non-polymeric surfactant" relates to surface active compounds having an molecular weight below 1000 Dalton, in particular below 800 Dalton (number average), while the term "polymeric surfactant" relates to surface active substances having an molecular weight exceeding 1000 Dalton (number average).

The surfactant usually make up from 5 to 90% by weight, frequently from 10 to 80% by weight, preferably from 15 to 50% by weight and in particular from 20 to 50% by weight, based on the total weight of the formulation according to the invention. The weight ratio of surfactant S to pesticide compound C is frequently from 0.6:1 to 10:1, preferably from 0.8:1 to 5:1 more preferably from 0.9:1 to 4:1, and in particular from 1:1 to 3:1.

The surfactants may be non-ionic, anionic, cationic or amphoteric. Suitable surfactants that may be contained in the liquid formulations of the invention are disclosed, e.g. in "McCutcheon's Detergents and Emulsifiers Annual", MC Publishing Corp., Ridgewood, NJ, USA 1981; H. Stache, "Tensid-Taschenbuch", 2nd ed., C. Hanser, Munich, Vienna, 1981; M. and J. Ash, "Encyclopedia of Surfactants", vol. I-III, Chemical Publishing Co.; New York, NY, USA 1980-1981.

Examples of non-polymeric surfactants comprise
- anionic non-polymeric surfactants, selected from the salts, in particular the sodium, potassium calcium or ammonium salts of
   - alkylsulfonates, such as lauryl sulfonate, isotridecylsulfonate,
   - alkylsulfates, in particular fatty alcohol sulfates, such as lauryl sulfate, isotridecylsulfate, cetylsulfate, stearylsulfate
   - aryl- and alkylarylsulfonates, such as napthylsulfonate, dibutyinaphtylsulfonate, alkyldiphenylether sulfonates such as dodecyldiphenylether sulfonate, alkylbenzene sulfonates such as cumylsulfonate, nonylbenzenesulfonate and dodecylbenzene sulfonate;
   - sulfonates of fatty acids and fatty acid esters;
   - sulfates of fatty acids and fatty acid esters;
   - sulfates of ethoxylated alkanoles, such as sulfates of ethoxylated lauryl alcohol;
   - sulfates of alkoxylated alkylphenols;
   - alkylphosphates, in particular C₈-C₁₆ alkylphosphates;
   - dialkylphosphates, in particular C₈-C₁₆ dialkylphosphates;
   - dialkylesters of sulfosuccinic acid, such as dioctylsulfosuccinate,
   - acylsarcosinates,
   - fatty acids, such as stearates,
   - acylglutamates,
   - ligninsulfonates,
   - low molecular weight condensates of naphthalinesulfonic acid or phenolsulfonic acid with formaldehyde and optionally urea;
- non-ionic non-polymeric surfactants, selected from the group of
   - ethoxylated alkanoles, in particular ethoxylated fatty alcohols and ethoxylated oxoalcohols, such as ethoxylated lauryl alcohol, ethoxylated isotridecanol, ethoxylated cetyl alcohol, ethoxylated stearyl alcohol, and esters thereof, such as acetates
   - ethoxylated alkylphenols, such as ethoxylated nonylphenyl, ethoxylated dodecylphenyl, ethoxylated isotridecylphenol and the esters thereof, e.g. the acetates
   - alkylglucosides and alkyl polygucosides,
   - ethoxylated alkylglucosides,
   - ethoxylated fatty amines,
   - ethoxylated fatty acids,
   - partial esters, such as mono-, di- and triesters of fatty acids with glycerine or sorbitan, such as glycerine monostearate, glycerine monooleate, sorbitanmonolaurate, sorbitanmonopalmitate, sorbitanmonostearate, sorbitan monooleate, sorbitantristearate, sorbitan trioleate;
   - ethoxylated esters of fatty acids with glycerine or sorbitan, such as polyoxyethylene glycerine monostearate, polyoxyethylene sorbitanmonolaurate, sorbitanmonopalmitate, polyoxyethylene sorbitanmonostearate, polyoxyethylene sorbitan monooleate, polyoxyethylene sorbitantristearate, polyoxyethylene sorbitan trioleate;
   - ethoxylates of vegetable oils or animal fats, such as corn oil ethoxylate, castor oil ethoxylate, tallow oil ethoxylate,
   - ethoxylates of fatty amines, fatty amides or of fatty acid diethanolamides
- cationic non-polymeric surfactants, selected from the group of
   - quaternary ammonium compounds, in particular alkyltrimethylammonium salts and dialkyldimethylammonium salts, e.g. the halides, sulfates and alkylsulfates
   - Pyridinium salts, in particular alkylpyridinium salts e.g. the halides, sulfates and C₁-C₄-alkylsulfates and
   - Imidazolinium salts in particular N,N'-dialkylimidazolinium salts, e.g. the halides, sulfates or methoxulfates.

As regards the non-polymeric surfactants, the term "alkyl" as used herein and if not defined otherwise is a linear or branched alkyl group having from 4 to 30, preferably from 6 to 22 carbon atoms, e.g. n-hexyl, 1-methylpentyl, n-heptyl, n-octyl, 2-ethylhexyl, n-nonyl, n-decyl, 1-methylnonyl, 2-propylheptyl, n-dodecyl, 1-methyldodecyl, n-tridecyl, n-tetradecyl, n-pentadecyl, n-hexadecyl, n-heptadecyl, n-octadecyl, n-nonadecyl, n-eicosyl, and the like. Likewise, the terms "fatty acid", "fatty alcohol", "fatty amine" and "fatty amide" refer to alkanoic acids, alkanols, alkylamines or alkanoic amides having from 6 to 30, in particular from 8 to 22 carbon atoms and wherein the saturated alkyl radical may be linear or branched. The terms "ethoxylated", "polyoxyalkylene" or "polyoxyethylene", respectively, mean that OH-functions have been reacted with ethyleneoxide or C₂-C₄-alkylene oxide to form a oligoalkylen oxide (= polyoxyalkylene) or oligoethyleneoxide (= polyoxyethylene) group. The degree of alkoxylation or ethoxylation (number average of alkylene oxide or ethyleneoxide repeating units) will usually be in the range from 1 to 50 and in particular from 2 to 40 more preferably from 2 to 30.

Examples of polymeric surfactants include
- anionic polymers having anionic groups such as carboxylate groups or sulfonate groups and lipophilic moieties, e.g. the salts of copolymers of monoethylenically unsaturated carboxylic acids, such as acrylic acid or methacrylic acid, with monoethylenically hydrocarbons, such as styrene, or C₂-C₁₈ olefines, salts of copolymers of monoethylenically unsaturated sulfonic acids with alkylacrylates or methacrylates.
- non-ionic polymers having polyether moieties such as poly-C₂-C₁₀-alkyleneethers containing polymerized units derived from ethylene oxide and polymerized units derived from C₃-C₁₀-alkylene oxides, in particular blockcopolymers comprising at least one polyethyleneoxide moiety PEO and at least one polyether moiety PAO (hereinafter also termed hydrophobic polyether moiety PAO) consisting of repeating units selected from C₃-C₁₀-alkylene oxides and styrene oxide,
- cationic polymers having protonized or quaternized amino groups such as protonated polyalkylene imines, protonated or quaternized homo or copolymers of vinylpyridines, protonated or quaternized homo or copolymers of vinylimidazole.

Preferably, the surfactant S or the mixture of surfactants S, which is contained in the formulation of the present invention, has a HLB-value ranging from 5 to 20 and in particular from 7 to 18, more preferably from 9 to 16. The HLB value (hydrophilic lipophilic balance) is an empirical quantity, which measures of the polarity of a surfactant or mixture of surfactants (see P. Becher et al, Non-ionic surfactants, Physical Chemistry, Marcel Dekker, N.Y. (1987), pp. 439-456).

In a preferred embodiment of the invention, the at least one surfactant S is at least one non-ionic blockcopolymer P as defined herein, a mixture of at least one non-ionic blockcopolymer P with one or more other non-ionic surfactants or a mixture of at least one non-ionic blockcopolymer P and at least one ionic surfactant, in particular at least one anionic surfactant. Preferably, the surfactant comprises at least 90 % by weight, in particular at least 95% by weight, more preferably at least 99% by weight, based on the total amount of surfactant in the formulation, of at least one non-ionic blockcopolymer P, and not more than 10%, by weight, in particular not more than 5% by weight, more preferably not more than 1 % by weight, based on the total amount of surfactant in the formulation, of ionic surfactant.

Non-ionic surfactants other than non-ionic blockcopolymers P are preferably selected from ethoxylated alkanols, sorbitan esters of fatty acids, polyoxyethylene sorbitan esters of fatty acids, alkyl glucosides , alkyl polyglucosides, polyoxyethylene alkyl glucosides, ethoxylated fatty amines, ethoxylated fatty acids and ethoxylated esters of fatty acids with glycerine.

The at least one surfactant S of the formulations according to the invention comprises at least one non-ionic blockcopolymer P, comprising at least one polyethyleneoxide moiety PEO and at least one polyether moiety PAO consisting of repeating units derived from C₃-C₁₀-alkyleneoxides and/or styrene oxide. In this very preferred embodiment, the surfactant comprises at least 50% by weight, in particular at least 80% by weight, by weight, based on the total amount of surfactant in the formulation, of at least one non-ionic blockcopolymer P, as defined herein. In the very preferred embodiment, the amount of ionic surfactants will not exceed 10%, by weight, and will be in particular not more than 5% by weight, more preferably not more than 1 % by weight, based on the total amount of surfactant in the formulation. In this very preferred embodiment the non-ionic portion of the surfactant S can be a mixture of at least one non-ionic blockcopolymer P and at least one non-ionic, non-polymeric surfactant. The relative weight (weight ratio) of non-ionic blockcopolymer P and non-ionic non-polymeric surfactant will be generally at least 1:1 and may range from 1:1 to 19:1, in particular from 4:1 to 9:1. However it is also very preferred, when the non-ionic blockcopolymer makes up at least 90% by weight, in particular at least 95% by weight and more preferably at least 99% by weight of the total amount of surfactant S contained in the formulation.

In this very preferred embodiment, the non-ionic blockcopolymers P usually make up from 10 to 80% by weight, preferably 15 to 50% by weight and in particular 20 to 50% by weight of the formulatione according to the invention. The weight ratio of non-ionic blockcopolymer P to pesticide compound C is preferably from 0.8:1 to 5:1 more preferably from 0.9:1 to 4:1, and in particular from 1:1 to 3:1.

The PAO moiety in the non-ionic blockcopolymer P usually comprises at least 3, preferably at least 5, in particular 10 to 100 repeating units (number average) which are derived from C₃-C₁₀ alkyleneoxides, such as propyleneoxide, 1,2-butyleneoxide, cis- or trans-2,3-butyleneoxide or isobutyleneoxide, 1,2-pentenoxide, 1,2-hexene oxide, 1,2-decene oxide or styrene oxide. Thus, the PAO moieties can be described by the general formula (-O-CHR^{x}-CHR^{y})_{q}, wherein q is the number of repeating units in the PAO moiety, R^{x} and R^{y} are independently selected from C₁-C₈ alkyl and hydrogen, provided that at least one of the radicals R^{x}, R^{y} is different from hydrogen and the total number of carbon atoms of R^{x} and R^{y} in one repeating unit is from 1 to 8. One of the radicals R^{x} or R^{y} may also be a phenyl radical while the other is hydrogen.

Preferably, the repeating units in the PAO moiety are derived from C₃-C₄ alkyleneoxides, in particular from proplyene oxide. Preferably, the PAO moieties comprise at least 50% by weight and more preferably at least 80% by weight of repeating units derived from propyleneoxide. If the PAO moiety comprises different repeating units, these different repeating units may be arranged statistically or preferably blockwise.

The PEO moieties of the non-ionic blockcopolymer P usually comprise at least 3, preferably at least 5, and more preferably at least 10 repeating units derived from ethyleneoxide (number average). Thus, the PEO moiety can be described by the General formula (CH₂-CH₂-O)ₚ, wherein p is the number of repeating units within the PEO moiety.

The total number of ethyleneoxide repeating units in the PEO moiety or moieties and repeating units in the PAO moiety or moieties will usually be in the range from 20 to 2,000, preferably 40 to 1,000 and in particular 65 to 450 (number average). Among the non-ionic blockcopolymers P those are preferred which have a number average molecular weight M_{N} ranging from 1,200 to 100,000 Dalton, preferably from 2,000 to 60,000 Dalton, more preferably from 2,500 to 50,000 Dalton and in particular from 3,000 to 20,000 Dalton.

The weight ratio of PEO moieties and PAO moieties (PEO:PAO) in the non-ionic blockcopolymer usually ranges from 1:10 to 10:1, preferably from 1:10 to 2:1, more preferably from 2:8 to 7:3 and in particular from 3:7 to 6:4.

In general, the PEO moieties and the PAO moieties make up at least 80% by weight and preferably at least 90% by weight, e.g. 90 to 99.5% by weight of the non-ionic blockcopolymer P.

Among the blockcopolymers P those are preferred which have a HLB-value ranging from 5 to 20 and in particular from 7 to 18.

Preferred blockcopolymers for use in the formulations of the invention can be described by the following formulae P1 to P5:

R¹-PEO-O-PAO-R² P1

R¹-PAO-O-PEO-H P2

R³-PEO-PAO-NR-PAO'-PEO'-R⁴ P3

R³-PEO-PAO-(O-A)ₙ-G-PAO'-PEO'-R⁴ P4

R³-PEO-PAO-NR^{a}-A'-NR^{b}-PAO'-PEO'-R⁴ P5

wherein n is 0 or 1,
- A, A': are a bivalent organic radical which has 2 to 20 carbon atoms and which may carry 1 or 2 hydroxy groups and/or 1, 2, 3 or 4 ether moieties and which may also carry 1 or 2 radicals of the formula R²-PEO-PAO-
- PAO, PAO': are PAO moieties as defined above, in particular poly-C₃-C₄-alkylenoxide moieties,
- PEO, PEO': are polyethyleneoxide moieties,
- R: is C₁-C₂₀ alkyl or a radical R²-PEO-PAO-
- R¹: is C₁-C₂₀ alkyl or C₁-C₂oalkylphenyl,
- R², R³, R⁴: are each independently hydrogen, C₁-C₈ alkyl, C₁-C₈ alkylcarbonyl, or benzyl, and
- R^{a}, R^{b}: are each independently hydrogen, C₁-C₈ alkyl or a radical R²-PEO-PAO-.

A skilled person will readily understand that the radicals R¹, R², R³ and R⁴ in formulae P1 to P5 are linked to the PEO or PAO moiety via an oxygen atom.

R¹ and R² in formulae P1 and P2 are preferably C₁-C₂₀ alkyl and in particular C₁-C₈ alkyl, such as methyl, ethyl, n-propyl, isopropyl, n-butyl, 2-butyl, n-pentyl, n-hexyl, n-heptyl, n-octyl, 2-ethylhexyl, n-decyl, isodecyl, 3-propylhexyl and the like. R² in formula P1 is preferably hydrogen. R³ and R⁴ in formulae P3, P4 and P5 are preferably hydrogen. R in formula P3 is preferably C₁-C₂₀ alkyl, in particular C₄-C₂₀ alkyl.

Suitable radicals A and A' in formulae P4 and P5 may be aliphatic or cycloaliphatic radicals or aromatic radicals or mixed aromatic/aliphatic or mixed aliphatic/cycloaliphatic radicals. Examples for aliphatic radicals A and A' are C₂-C₂₀ alkandiyl, wherein 1, 2, 3 or 4 CH₂-moieties may be replaced by oxygen or sulfur, e.g. ethane-1,2-diyl, propane-1,3-diyl, butane-1 ,4-diyl, hexane-1,4-diyl, 3-oxapentane-1,5-diyl, 3-oxahexane-1,6-diyl, 4-oxaheptahe-1,7-diyl, 3,6-dioxaoctane-1,8-diyl, 3,7-dioxanonane-1,9-diyl and 3,6,9-trioxaundecan-1,11-diyl. Examples of cycloaliphatic radicals A, A' comprise C₅-C₈-cycloalkane-diyl and C₇-C₁₂ bicycloalkanediyl, which may carry 1, 2, 3 or 4 C₁-C₄-alkyl groups, e.g. methyl groups, such as cyclohexane-1,2-, -1,3-, and -1,4-diyl. Aromatic radicals A, A' are for example 1,2-phenylene, 1,3-phenylene, 1,4-phenylene. Mixed aliphatic/aromatic radicals A, A' are those which comprise one or more alkanediyl units and at least one aromatic unit such as a phenyl ring. Examples for mixed aliphatic/aromatic radicals A, A' comprise diphenylmethane-4,4'-diyl, 4,4'-[2,2-bis(phenyl)propane]diyl and the like. Mixed aliphatic/cycloaliphatic radicals A, A' are those which comprise one or more alkanediyl units and at least one cycloaliphatic unit such as a cyclohexane ring. Examples for mixed aliphatic/cycloaliphatic radicals A, A' comprise methylcyclohexane-1,7-diyl, 4,4'-[bis(cyclohexyl)methane]diyl, 4,4'-[2,2-bis(cyclohexyl)propane]diyl and the like. Preferred radicals A, A' are selected from C₂-C₂₀ alkandiyl, wherein 1,2, 3 or 4 CH₂-moieties may be replaced by oxygen.

Amongst the non-ionic blockcopolymers of formulae P1 to P5 those of formulae P2 and P4 are especially preferred.

According to the invention, a single type of non-ionic blockcopolymer P or different types of blockcopolymers P may be used. In a preferred embodiment the liquid pesticide formulation comprises at least 2, e.g. 2, 3 or 4 different types of non-ionic blockcopolymers P. Different types means that the blockcopolymers are distinct with regard to at least one of the following features: molecular weight, weight ratio of PEO to PAO, the HLB-value or the molecular architecture. Preferably, at least one and more preferably two or all of the blockcopolymers combines at least two or all of the preferred features. In such mixtures the blockcopolymer P that combines at least two or all of the preferred features makes up at least 20% by weight, preferably at least 30% by weight, e.g. 20 to 90% by weight, in particular 30 to 80% by weight of the total amount of blockcopolymer P in the formulation.

Non-ionic blockcopolymers P are known in the art and commercially available under the trade names Pluronic®, such as Pluronic® P 65, P84, P 103, P 105, P 123 and Pluronic® L 31, L 43, L 62, L 62 LF, L 64, L 81, L 92 and L 121, Pluraflo® such as Pluraflo® L 860, L1030 and L 1060Tetronic®, such as Tetronic® 704, 709, 1104, 1304, 702, 1102, 1302, 701, 901, 1101, 1301 (BASF Aktiengesellschaft), Agrilan® AEC 167 and Agrilan® AEC 178 (Akcros Chemicals), Antarox® B/848 (Rhodia), Berol® 370 and Berol® 374 (Akzo Nobel Surface Chemistry), Dowfax® 50 C15, 63 N10, 63 N30, 64 N40 and 81 N10 (DowEurope), Genapol® PF (Clariant), Monolan®, such as Monolan® PB, Monolan® PC, Monolan® PK (Akcros Chemicals), Panox® PE (Pan Asian Chemical Corporation), Symperonic®, such as Symperonic® PE/L, Symperonic® PE/F, Symperonic® PE/P, Symperonic® PE/T (ICI Surfactants), Tergitol® XD, Tergitol® XH and Tergitol® XJ (Union Carbide), Triton@ CF-32 (Union Carbide), Teric PE Series (Huntsman) and Witconol®, such as Witconol® APEB, Witconol® NS 500 K and the like.

The formulation of the invention may further contain customary auxiliaries, such as defoamers, thickeners, preservatives; colorants, stabilizers, adjuvants, wetting agents, penetrants, coupling agents and the like which are usually employed in non-aqueous formulations of pesticides. A skilled person will appreciate that some of the aforementioned components, e.g. surfactants and solvents, may also work as auxiliaries. In particular, solvents may work as antifreeze agents or penetrants and the aforementioned surfactants may work as adjuvants or wetting agents.

Suitable thickening agents include inorganic thickening agents, such as clays, hydrated magnesium silicates and organic thickening agents, such as polysaccharide gums, like xanthan gum, guar gum, gum arabic and cellulose derivatives. Organic thickening agents are employed in amounts of from 0.5 to 30 g/l and preferably from 1 to 10 g/l while inorganic thickening agents are employed in amounts of from 0.5 to 30 g/l and preferably from 1 to 10 g/l.

Suitable preservatives to prevent microbial spoiling of the formulations of the invention include formaldehyde, alkyl esters of p-hydroxybenzoic acid, sodium benzoate, 2-bromo-2-nitropropane-1,3-diol, o-phenylphenol, thiazolinones, such as benzisothiazolinone, 5-chloro-2-methyl-4-isothiazolinone, pentachlorophenol, 2,4-dichlorobenzyl alcohol and mixtures thereof. In general, the amount of preservatives will be from 0.1 to 10 g/l.

Suitable defoamers include polysiloxanes, such as polydimethyl siloxane. Defoamers are usually employed in amounts of from 0.1 to 5 g/l:
Suitable stabilizers comprise e.g. UV-absorbers such as cinnamic esters, 3,3-diphenyl-2-cyano acrylates, hydroxy and/or alkoxy substituted benzophenones, N-(hydroxyphenyl)-benzotriazoles, hydroxyphenyl-s-triazines, oxalic amides and salicylates, e.g. the UVINUL® 3000, 3008, 3040, 3048, 3049, 3050, 3030, 3035, 3039, 3088, UVINUL® MC80 and radical scavengers, e.g. ascorbic acid, sterically hindered amines (HALS-compounds) such as UVINUL® 4049H, 4050H and 5050H, and the like and anti-oxidants such as vitamin E. In general, the amount of stabilizer will be from 0.01 to 10 g/l of the concentrate formulation.

These customary auxiliaries may be contained within the formulation of the present invention. However, it is also possible to add these auxiliaries after dilution with water to the ready-to-use aqueous formulation.

Upon dilution with water, the liquid formulations of the invention form an aqueous pesticide preparation which contains the at least one organic pesticide compound C, the at least one organic solvent S, the at least one surfactant S and water. In these preparations, the at least one organic pesticide compound is present in the form of finely divided particles having a particle size in the nm range, i.e. the average particle size as determined by dynamic light scattering (at 25°C and 1,013 mbar) is below 500 nm, preferably in the range from 100 to 300 nm, in particular in the range from 10 to 200 nm and most preferably in the range from 10 to 100 nm.

In order to obtain these aqueous pesticide preparations, the liquid formulations of the invention are usually diluted with at least 5 parts of water, preferably at least 10 parts of water, in particular at least 20 parts of water and more preferably at least 50 parts of water, e.g. from 10 to 10,000, in particular from 20 to 1,000 and more preferably from 50 to 250 parts of water per one part of the liquid formulation (all parts are given in parts by weight).

Dilution will be usually achieved by pouring the concentrate formulation of the invention into water. Usually, dilution is achieved with agitation, e.g. with stirring, to ensure a rapid mixing of the concentrate in water. However, agitation is not necessary. Though the temperature of mixing is not critical, mixing is usually performed at temperatures ranging from 0 to 100°C, in particular from 10 to 50°C or at ambient temperature.

The water used for mixing is usually tap water. However the water may already contain water soluble compounds which are used in plant protection, e.g. nutrificants, fertilizers or water soluble pesticides.

The aqueous pesticide preparations obtained by dilution can be used as such for plant protection, i.e. for combating organisms that are harmful to plants or for protecting crops from attack or infestation by such an harmful organism. Therefore, the present invention also relates to an aqueous pesticide preparation which is obtained by diluting the liquid concentrate formulation of the present invention. The present invention also relates to the use of the liquid pesticide formulations of the invention for plant protection and in particular to a method of combating organisms that are harmful to plants such as weeds, fungi, insects, arachnids or nematodes, which comprises contacting said harmful organisms, their habit, breeding ground, food supply, plant, seed, soil, area, material or environment in which the harmful organisms are growing or may grow, or the materials, plants, seeds, soils, surfaces or spaces to be protected from attack or infestation by harmful organisms with an effective amount of an diluted aqueous formulation as described herein. The invention also relates to a method for protecting crops from attack or infestation by harmful organisms such as weeds, fungi, insects, arachnids or nematodes, which comprises contacting a crop with an effective amount of an aqueous preparation as described herein.

The preparations of the invention obtained by diluting the liquid concentrate formulations are applied by usual means which are familiar to a skilled person.

If the formulations contain a fungicide compound they may be applied against the following harmful fungi:
- Alternaria species on vegetables and fruit and rice,
- Bipolaris and Drechslera species on cereals, rice and turf,
- Blumeria graminis (powdery mildew) on cereals,
- Botrytis cinerea (gray mold) on strawberries, vegetables, ornamentals and grapevines,
- Erysiphe cichoracearum and Sphaerotheca fuliginea on cucurbits,
- Fusarium and Verticillium species on various plants,
- Mycosphaerella species on cereals, bananas and peanuts,
- Phakopsara pachyrhizi and Phakopsara meibomiae on soybeans
- Phytophthora infestans on potatoes and tomatoes,
- Plasmopara viticola on grapevines,
- Podosphaera leucotricha on apples,
- Pseudocercosporella herpotrichoides on wheat and barley,
- Pseudoperonospora species on hops and cucumbers,
- Puccinia species on cereals,
- Pyricularia oryzae, Cochliobolus miyabeanus and Corticium sasakii (Rhizoctonia solani), Fusarium semitectum (and/or moniliforme), Helminth. Spp, Cercospora oryzae, Cochliobolus miyabeanus, Sarocladium oryzae, S attenuatum, Entyloma oryzae, Gibberella fujikuroi (bakanae), Grainstaining complex (various pathogens), Bipolaris species, Drechslera species, Agaricomycetidae such as Rhizoctonia solani and/or Pythium on rice,
- Rhizoctonia species on cotton, rice and turf,
- Septoria tritici and Stagonospora nodorum on wheat,
- Uncinula necator on grapevines,
- Ustilago species on cereals and sugar cane, and
- Venturia species (scab) on apples and pears;
- Paecilomyces variotii on materials (e.g. wood)

If the formulations contain a compound, having insecticidal, acaricidal or nematicidal activity they may be applied against the following pest:
Insects (plant parasitic) from the order of the
   - lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absbluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis,
   - beetles (Coleoptera), for example Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, lps typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus and Sitophilus granaria,
   - dipterans (Diptera), for example Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea and Tipula paludosa,
   - thrips (Thysanoptera), e.g. Frankliniella fusca, Frankliniella occidentalis, Frankliniella tritici, Scirtothrips citri, Thrips oryzae, Thrips palmi and Thrips tabaci,
   - hymenopterans (Hymenoptera), e.g. Athalia rosae, Atta cephalotes, Atta sexdens, Atta texana, Hoplocampa minuta, Hoplocampa testudinea, Monomorium pharaonis, Solenopsis geminata and Solenopsis invicta,
   - heteropterans (Heteroptera), e.g. Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis and Thyanta perditor,
   - homopterans (Homoptera), e.g. Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, and Viteus vitifolii;
   - termites (Isoptera), e.g. Calotermes flavicollis, Leucotermes flavipes, Heterotermes aureus, Reticulitermes flavipes, Reticulitermes virginicus, Reticulitermes lucifugus, Reticulitermes santonensis, Reticulitermes grassei, Coptotermes formosanus, and Termes natalensis;
   - orthopterans (Orthoptera), e.g. Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Schistocerca gregaria, Dociostaurus maroccanus, Oedalus seneganlensis, Zonozerus variegatus, Hyroglyphus daganensis, Kraussaria angulifera, Calliptamus italicus, Chortoicetes terminifera, Locustana pardalina, Stauronotus maroccanus and Tachycines asynamorus ;
Arachnoidea, such as arachnids (Acarina), e.g. of the families Argasidae, Ixodidae and Sarcoptidae, such as Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and oligonychus pratensis;
Nematodes, especially plant parasitic nematodes such as root knot nematodes, Meloidogyne hapla, Meloidogyne incognita, Meloidogyne javanica, and other Meloidogyne species; cyst-forming nematodes, Globodera rostochiensis and other Globodera species; Heterodera avenae, Heterodera glycines, Heterodera schachtii, Heterodera trifolii, and other Heterodera species; Seed gall nematodes, Anguina species; Stem and foliar nematodes, Aphelenchoides species; Sting nematodes, Belonolaimus Iongicaudatus and other Belonolaimus species; Pine nematodes, Bursaphelenchus xylophilus and other Bursaphelenchus species; Ring nematodes, Criconema species, Criconemella species, Criconemoides species, Mesocriconema species; Stem and bulb nematodes, Ditylenchus destructor, Ditylenchus dipsaci and other Ditylenchus species; Awl nematodes, Dolichodorus species; Spiral nematodes, Heliocotylenchus multicinctus and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, Longidorus elongatus and other Longidorus species; Lesion nematodes, Pratylenchus neglectus, Pratylenchus penetrans, Pratylenchus curvitatus, Pratylenchu.s goodeyi and other Pratylenchus species; Burrowing nematodes, Radopholus similis and other Radopholus species; Reniform nematodes, Rotylenchus robustus and other Rotylenchus species; Scutellonema species; Stubby root nematodes, Trichodorus primitivus and other Trichodorus species, Paratrichodorus species; Stunt nematodes, Tylenchorhynchus claytoni, Tylenchorhynchus dubius and other Tylenchorhynchus species; Citrus nematodes, Tylenchulus species; Dagger nematodes, Xiphinema species; and other plant parasitic nematode species ;
If the formulations according to the invention contain an insecticide compound which is active against rice pathogens, the formulation may also be used to combat rice phatogens such as rice water weevil (Lissorhoptrus oryzaphilus), rice stem borer (Chilo suppresalis), rice leaf roller, rice leaf beetle, rice leaf miner (Agromyca oryzae), leafhoppers (Nephotettix spp.;especially smaller brown leafhopper, green rice leafhopper), planthoppers (Delphacidae; especially white backed planthopper, brown rice planthopper), stinkbugs.

If the formulations according to the invention contain a herbicide compound it will be used to controll undesired vegetation. The control of undesired vegetation is understood as meaning the destruction of weeds. Weeds, in the broadest sense, are understood as meaning all those plants which grow in locations where they are undesired, for example:
Dicotyledonous weeds of the genera: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Monocotyledonous weeds of the genera: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagittaria, Eleocharis, Scirpus, Paspalum, Ischaemum, Sphenoclea, Dactyloctenium, Agrostis, Alopecurus, Apera.

The formulations containing a herbicide can be applied in conventional manner, usually as an aqueous preparation which is obtainde from a formulation of the invention by diluting with water.

The required application rate of the pure active compounds without formulation auxiliary, depends on the density of the undesired vegetation, on the development stage of the plants, on the climatic conditions of the location where the formulation is used and on the application method. In general, the application rate is from 0.001 to 3 kg/ha, preferably from 0.005 to 2 kg/ha and in particular from 0.01 to 1 kg/ha, from 0.1 g/ha to 1 kg/ha, from 1 g/ha to 500 g/ha or from 5 g/ha to 500 g/ha of active substance.

The diluted preparations are applied to the plants mainly by spraying, in particular foliar spraying. Application can be carried out by customary spraying techniques using, for example, water as carrier and spray liquor rates of from about 100 to 1 000 l/ha (for example from 300 to 400 l/ha). Application of the preparations by the low-volume and the ultra-low-volume method is possible, as is their application in the form of microgranules.

In a preferred embodiment of the invention, formulation of active ingredients are applied in a rate which provides control of weeds or crops, in particular post-emergence to the weed or crop, but preferably prior to the planting, seeding or emergence of a desired crop.

In another preferred embodiment of the invention, control of weeds or crops is provided by an application of the formulation of active ingredients before a desired crop is seeded, planted or emerged (pre-emergence or pre-plant application), followed by one or more treatments after the crop is emerged with one or more herbicides which are selective in the crop.

Moreover, it may be useful to apply the formulations according to the invention jointly as a mixture with other crop protection products, for example with pesticides or agents for controlling phytopathogenic fungi or bacteria. Also of interest is the miscibility with mineral salt solutions which are employed for treating nutritional and trace element deficiencies. Non-phytotoxic oils and oil concentrates may also be added.

In a further embodiment of the invention, the formulations contain a compound, in particular an insecticide compound which is active against non-crop pests. Therefore the invention also relates to a method for controlling non-crop pests comprising contacting the pests or their food supply, habitat, breeding grounds or their locus with formulation according to the invention comprising at least an insecticide.

The invention further relates to the use of a formulation according to the invention comprising at least an insecticide for the protection of non-living organic materials against non-crop pests.

Non-crop pests are pests of the classes Chilopoda and Diplopoda and of the orders Isoptera, Diptera, Blattaria (Blattodea), Dermaptera, Hemiptera, Hymenoptera, Orthoptera, Siphonaptera, Thysanura, Phthiraptera, Araneida, Parasitiformes and Acaridida, for example:
- centipedes (Chilopoda), e.g. Scutigera coleoptrata,
- millipedes (Diplopoda), e.g. Narceus spp.,
- spiders (Araneida), e.g. Latrodectus mactans, and Loxosceles reclusa,
- scabies (Acaridida): e.g. sarcoptes sp,
- ticks and parasitic mites (Parasitiformes): ticks (Ixodida), e.g. Ixodes scapularis, Ixodes holocyclus, Ixodes pacificus, Rhiphicephalus sanguineus, Dermacentor andersoni, Dermacentor variabilis, Amblyomma americanum, Ambryomma maculatum, Ornithodorus hermsi, Ornithodorus turicata and parasitic mites (Mesostigmata), e.g. Ornithonyssus bacoti and Dermanyssus gallinae,
- termites (Isoptera), e.g. Calotermes flavicollis, Leucotermes flavipes, Heterotermes aureus, Reticulitermes flavipes, Reticulitermes virginicus, Reticulitermes lucifugus, Reticulitermes santonensis, Reticulitermes grassei, Termes natalensis, and Coptotermes formosanus,
- orthopterans (Orthoptera) such as cockroaches (Blattaria - Blattodea), e.g. Blattella germanica, Blattella asahinae, Periplaneta americana, Periplaneta japonica, Periplaneta brunnea, Periplaneta fuligginosa, Periplaneta australasiae, and Blatta orientalis, and alsoother orthopterans Schistocerca gregaria, Dociostaurus maroccanus, Oedalus seneganlensis, Zonozerus variegatus, Hyroglyphus daganensis, Kraussaria angulifera, Calliptamus italicus, Chortoicetes terminifera, Locustana pardalina,
- flies, mosquitoes (Diptera), e.g. Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, Calliphora vicina, Chrysomya bezziana, Chrysomya hominivorax, Chrysomya macellaria, Chrysops discalis, Chrysops silacea, Chrysops atlanticus, Cochliomyia hominivorax, Cordylobia anthropophaga, Culicoides furens, Culex pipiens, Culex nigripalpus, Culex quinquefasciatus, Culex tarsalis, Culiseta inornata, Culiseta melanura, Dermatobia hominis, Fannia canicularis, Gasterophilus intestinalis, Glossina morsitans, Glossina palpalis, Glossina fuscipes, Glossina tachinoides, Haematobia irritans, Haplodiplosis equestris, Hippelates spp., Hypoderma lineata, Leptoconops torrens, Lucilia caprina, Lucilia cuprina, Lucilia sericata, Lycoria pectoralis, Mansonia spp., Musca domestica, Muscina stabulans, Musca autumnalis, Oestrus ovis, Phlebotomus argentipes, Psorophora columbiae, Psorophora discolor, Prosimulium mixtum, Sarcophaga haemorrhoidalis, Sarcophaga sp., Simulium vittatum, Stomoxys calcitrans, Tabanus bovinus, Tabanus atratus, Tabanus lineola, and Tabanus similis,
- Earwigs (Dermaptera), e.g. forficula auricularia,
- true bugs (Hemiptera), e.g. Cimex lectularius, Cimex hemipterus, Reduvius senilis, Triatoma spp., Rhodnius prolixus, and Arilus critatus,
- ants, bees, wasps, sawflies (Hymenoptera), e.g. Crematogaster spp., Hoplocampa minuta, Hoplocampa testudinea, Monomorium pharaonis, Solenopsis geminata, Solenopsis invicta, Solenopsis richteri, Solenopsis xyloni, Pogonomyrmex barbatus, Pogonomyrmex californicus, Dasymutilla occidentalis, Bombus spp. Vespula squamosa, Paravespula vulgaris, Paravespula pennsylvanica, Paravespula germanica, Dolichovespula maculata, Vespa crabro, Polistes rubiginosa, Camponotus floridanus, Lasius niger and Linepithema humile,
- crickets, grasshoppers, locusts (Orthoptera), e.g. Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera, and Locustana pardalina,
- fleas (Siphonaptera), e.g. Ctenocephalides felis, Ctenocephalides canis, Xenopsylla cheopis, Pulex irritans, Tunga penetrans, and Nosopsyllus fasciatus,
- silverfish, firebrat (Thysanura), e.g. Lepisma saccharina and Thermobia domestica,
- lice (Phthiraptera), e.g. Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus and Solenopotes capillatus.

For examples, formulation according to the invention comprising at least an insecticide can be used for the protection of non-living organic materials, including but are not limited to house-hold goods such as fats, oils, mono- oligo- or polyorganosaccharides, proteins, or fresh or decaying fruits; cellulose-containing materials e.g. wooden materials such as houses, trees, board fences, or sleepers and also paper; and also construction materials, furniture, leathers, animal, plant and synthetic fibers, vinyl articles, electric wires and cables as well as styrene foams.

Furthermore, a formulation according to the invention comprising at least an insecticide can be used for the protection of non-living organic materials against non-crop pests selected from the group consisting of the class Diplopoda and of the orders Isoptera, Diptera, Blattaria (Blattodea), Dermaptera, Hemiptera, Hymenoptera, Orthoptera, and Thysanura.

The present invention also relates to a method for the protection of non-living organic materials against non-crop pests as mentioned above comprising contacting the pests or their food supply, habitat, breeding grounds, their locus or the non-living organic materials themselves with a pesticidally effective amount of a formulation according to the invention.

Furthermore, a formulation according to the invention comprising at least an insecticide can be used for protecting cellulose-containing non-living organic materials, e.g. for protecting cellulose-containing non-living organic materials against non-crop pests from the Isoptera, Diptera, Blattaria (Blattodea), Hymenoptera, and Orthoptera orders, most preferably the Isoptera orders.

The present invention also provides a method for protecting cellulose-containing non-living organic materials against non-crop pests, preferably from the Isoptera, Diptera, Blattaria (Blattodea), Hymenoptera, and Orthoptera orders, most preferably the Isoptera orders, comprising contacting the pests or their food supply, habitat, breeding grounds, their locus or the cellulose-containing non-living organic materials themselves with a a formulation according to the invention comprising at least an insecticide.

Furthermore, a formulation according to the invention comprising at least an insecticide can be used for for protecting mono- oligo- or polysaccharides and proteins.

Furthermore, a formulation according to the invention comprising at least an insecticide can be used for protection of mono- oligo- or polysaccharides and proteins against non-crop pests selected from the Dermaptera, Diplopoda, Isoptera, Diptera, Blattaria (Blattodea), Hymenoptera, Orthoptera and Tysanura orders, most preferably the Isoptera, Diptera, Blattaria (Blattodea), and Hymenoptra orders.

Furthermore, a formulation according to the invention comprising at least an insecticide can be used for used for protection of animals against non-crop pest of the class Chilopoda, and of the orders Araneida, Hemiptera, Diptera, Phthiraptera, Siphonaptera, Parasitiformes and Acaridida by treatment of the pests in water bodies and/ or in and around buildings, including but not limited to walls, ground, manure piles, turf grass, pastures, sewers and materials used in the construction of buildings and also mattresses and bedding, with a formulation according to the present invention.

Animals include warm-blooded animals, including humans and fish. Thus, a formulation according to the invention comprising at least an insecticide can be used for for protection of warm-blooded animals such as cattle, sheep, swine, camels, deer, horses, poultry, rabbits, goats, dogs and cats.

Furthermore, a formulation according to the invention comprising at least an insecticide can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities). A formulation according to the invention comprising at least an insecticide can be are applied not only to the surrounding soil surface or into the under-floor soil in order to protect wooden materials but it can also be applied to lumbered articles such as surfaces of the under-floor concrete, alcove posts, beams, plywoods, furniture, etc., wooden articles such as particle boards, half boards, etc. and vinyl articles such as coated electric wires, vinyl sheets, heat insulating material such as styrene foams, etc. In case of application against ants doing harm to crops or human beings, the ant control formulation of the present invention is directly applied to the nest of the ants or to its surrounding or via bait contact.

Furthermore, a formulation according to the invention comprising at least an insecticide can be applied preventively to places at which occurrence of the pests is expected.

If the formulation according to the present invention is intended for seed treatment purposes, the formulation may optionally comprise also pigments. Suitable pigments or dyes for seed treatment formulations are pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

The invention furthermore comprises seeds treated with the formulation according to the present invention.

Suitable seeds are for example various crop seeds, fruit species, vegetables, spices and ornamental seed, for example corn/maize (sweet and field), durum wheat, soybean, wheat, barley, oats, rye, triticale, bananas, rice, cotton, sunflower, potatoes, pasture, alfalfa, grasses, turf, sorghum, rapeseed, Brassica spp., sugar beet, eggplants, tomato, lettuce, iceberg lettuce, pepper, cucumber, squash, melon, bean, dry-beans, peas, leek, garlic, onion, cabbage, carrot, tuber such as sugar cane, tobacco, coffee, turf and forage, cruciferous, cucurbits, grapevines, pepper, fodder beet, oil seed rape, pansy, impatiens, petunia and geranium.

The following examples are intended to further illustrate the present invention.
I Analytics:
   Particle sizes were determined by dynamic light scattering with a "Nicomp by Particle Sizing System PSS, Model 370 at 25°C.
II Preparation of the formulations of the invention:
   1. In table 1, the following abbreviations are used:
      amidrazone I: 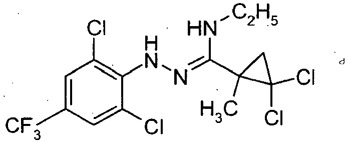
      amidrazone II: 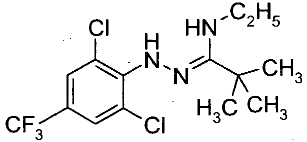
      M_{N} is the number average molecular weight
         - blockcopolymer P(1):: EO/PO triblockcopolymer, M_{N} 6000, EO/PO ratio 60:40,
         - blockcopolymer P(2):: EO/PO triblockcopolymer, M_{N} 4290, EO/PO ratio 30:70, HLB-Value 9.
         - blockcopolymer P(3):: EO/PO triblockcopolymer, M_{N} 7500, EO/PO ratio 60:40,
         - blockcopolymer P(4):: EO/PO triblockcopolymer, M_{N} 4200, EO/PO ratio 40:60, HLB-Value 12-18.

### General procedure A:

The active ingredient and optionally further additives are stirred in the solvent mixture SM at room temperature until complete dissolution. The thus obtained solution is mixed with surfactant S until a homogenous mixture is obtained.

### General procedure B:

The active ingredient and optionally further additives are stirred in a mixture of the solvent mixture SM and the surfactant S at room temperature until complete dissolution.

The compositions outlined in table 1 were prepared by the general procedure A. In table 1 the amounts of the ingredients are given in % by weight.

Upon dilution with water (100 parts per 1 part of composition) the compositions of table 1 form bluish clear compositions, wherein the active ingredient particles have an average diameter below 100 nm (as determined by quasi elastic light scattering). The diluted composition remains stable for at least 24 h. A diluted composition is estimated to be stable period of time if the particle size remains below 100 nm within said time period.

**Table 1: Comparative Examples C-1 to C-5**

| | C-1 | C-2 | C-3 | C-4 | C-4 | C-5 |
|---|---|---|---|---|---|---|
| amidrazone I | 10.7 | 10.7 | 10.4 | -- | -- | -- |
| amidrazone II | -- | -- | -- | 10.7 | 10.7 | 10.4 |
| blockcopolymer P(1) | 8.0 | -- | -- | 8.0 | -- | -- |
| blockcopolymer P(2) | 11.5 | 10.2 | 8.0 | 11.5 | 10.2 | 8.0 |
| blockcopolymer P(3) | 0.8 | 0.7 | 32.0 | 0.8 | 0.7 | 32.0 |
| blockcopolymer P(4) | -- | 7.1 | -- | -- | -- | -- |
| γ-butyrolactone | 69.0 | 71.3 | -- | -- | 71.0 | -- |
| propylene glycole | -- | -- | -- | -- | -- | -- |
| propylene carbonate | -- | -- | 49.6 | 59.7 | -- | 49.6 |
| Particle size initial¹⁾ [nm] | 70.8 | 49.4 | 26.0 | 67.9 | 59.7 | 40.1 |
| Particle size 24h²⁾ [nm] | 103.0 | 72.2 | 35.1 | 73.8 | 59.7 | 25.9 |
| Recovery [%]³⁾ | 99.2 | 98.1 | 97.3 | 99.4 | 99.1 | 95.4⁴⁾ |

| | | | | | | |
|---|---|---|---|---|---|---|
| 1) Particle size as measured directly after dilution. 2) Particle size as measured 24 h after dilution. 3) Recovery after 3 month storage at 50°C of the undiluted formulation 4) Recovery after 2 weeks storage at 54°C of the undiluted formulation | | | | | | |

### III. Determining the potential of the formulation to cause eye irritation (categories I to III)

The potential of the formulation to cause eye irritation was determined according to the method described by N.P. Luepke: Hen's Egg Chorio Allantoic Membrane Test for Irritation Potential, Fd. Chem. Toxic. 23 (1985), pp 287-291, (HET-CAM Test) which was modified according to the method of H. Spielmann (H. Spielmann: Methods in Molecular Biology 43 (1995) pp. 199-204, and H. Spielmann et al. ATLA 24 (1996), pp. 741-858.

In the HET-CAM test the chorio allantoic membrane is treated with an aqueous dilution of the test formulation at different concentrations. The chorio allantoic membrane is then observed for 5 minutes with regard to haemorrhage, coagulation and vascular lysis. Depending on the maximum concentration at wich no symptoms are observed, the time of occurrence and the gravity of the symptoms the test substance is categorized as follows:
Cat 0: strongly irritant
Cat 1: irritant
Cat II: moderately irritant
Cat III: no symptoms at a concentration of 10% or higher.

**Table 2: Potential of causing eye irritation**

| | C-1 | C-2 | C-3 | C-4 | C-4 | C-5 |
|---|---|---|---|---|---|---|
| Eye Irritance | cat I | cat I | cat I | cat I | cat I | cat I |

## Claims

1. A water-dilutable liquid concentrate formulation of an organic pesticide compound C having a water solubility of not more than 5 g/l at 25°C/1013 mbar, which comprises ,
a) at least one organic pesticide compound C having a water solubility of not more than 5 g/l at 25°C/1013 mbar,
b) a solvent mixture SM which comprises
i) at least one C₂-C₄-alkylene glycol and
ii) at least one C₂₋C₄-alkylene carbonate
wherein the components i) and ii) make up at least 90% of the solvent mixture,
or a mixture thereof with water, provided that the weight ratio of water to solvent-mixture SM does not exceed 1:2,
c) at least one surfactant S, which comprises at least one non-ionic blockcopolymer P, comprising at least one polyethyleneoxide moiety PEO and at least one polyether moiety PAO consisting of repeating units derived from C₃-C₁₀-alkyleneoxides and/or styrene oxide;
wherein the components a), b) and c) make up at least 90% of the formulation.

2. The formulation as claimed in claim 1, where the C₂-C₄-alkylene glycol is propandiol and where the C₂-C₄-alkylene carbonate is propylene carbonate.

3. The formulation as claimed in claim 1, where the weight ratio of C₂-C₄-alkylene glycol to C₂-C₄-alkylene carbonate is from 10:1 1 to 1:10.

4. The formulation as claimed in claim 1, wherein the non-ionic blockcopolymer makes up at least 90% by weight, based on the total amount of surfactant.

5. The formulation as claimed in claim 1, wherein the non-ionic blockcopolymer P has a number average molecular weight M_{N} ranging from 1,000 to 100,000 Dalton.

6. The formulation as claimed in any of claims 1 to 5, wherein the weight ratio of PEO moieties to PAO moieties in the non-ionic blockcopolymer ranges from 1:10 to 10:1.

7. The formulation as claimed in any of claims 1 to 6, containing the at least one organic pesticide compound C in an amount from 5 to 50% by weight, based on the total weight of the composition.

8. The formulation as claimed in any of claims 1 to 7, containing the non-ionic surfactant S in an amount from 10 to 80% by weight, based on the total weight of the composition.

9. The formulation as claimed in any of claims 1 to 8, containing the organic solvent-mixture SM in an amount from 10 to 85% by weight, based on the total weight of the composition.

10. The formulation as claimed in any of claims 1 to 9, wherein the weight ratio of surfactant S to organic pesticide compound C is from 0.6:1 to 10:1.

11. The formulation as claimed in any of claims 1 to 10, wherein the pesticide compound C comprises at least one insecticide compound.

12. The formulation as claimed in claim 11, wherein the insecticide compound C is selected from compounds of the formula I 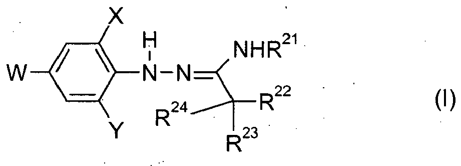 wherein
W is halogen or C₁-C₂-haloalkyl;
X and Y are each independently halogen;
R²¹ C₁-C₆-alkyl, C₂-C₆-alkenyl, C₂-C₆-alkynyl, C₁-C₄-alkoxy-C₁-C₄-alkyl or C₃-C₆-cycloalkyl each of which may be substituted with 1, 2, 3, 4 or 5 halogen atoms;
R²² and R²³ are C₁-C₆-alkyl or may together with the carbon atom, to which they are bound, form C₃-C₆-cycloalkyl which may be unsubstituted or substituted by 1 to 3 halogen atoms;
R²⁴ is hydrogen or C₁-C₆-alkyl,
including the enantiomers and salts thereof.

13. The formulation as claimed in claim 11, wherein the insecticide compound C is selected from compounds of the formula II 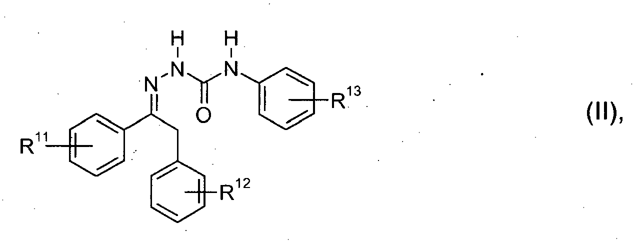 wherein R¹¹ and R¹² are each independently hydrogen, halogen, CN, C₁-C₄ alkyl, C₁-C₄ alkoxy, C₁-C₄ haloalkyl or C₁-C₄ haloalkoxy and R¹³ is C₁-C₄ alkoxy, C₁-C₄ haloalkyl or C₁-C₄ haloalkoxy.

14. The use of a formulation as claimed in any of claims 1 to 13 for plant protection.

15. A method of combating organisms that are harmful to plants, which comprises contacting said harmful organisms, their habit, breeding ground, food supply, plant, seed, soil, area, material or environment in which the harmful organisms are growing or may grow, or the materials, plants, seeds, soils, surfaces or spaces to be protected from attack or infestation by harmful organisms with an effective amount of an aqueous preparation which is obtained by diluting a formulation as claimed in any of claims 1 to 13 with water.

## Patentansprüche

1. Wasserverdünnbare flüssige Konzentratformulierung einer organischen Pestizidverbindung C mit einer Wasserlöslichkeit von höchstens 5 g/l bei 25°C/1013 mbar, umfassend
a) mindestens eine organische Pestizidverbindung C mit einer Wasserlöslichkeit von höchstens 5 g/l bei 25°C/1013 mbar,
b) eine Lösungsmittelmischung SM, umfassend
i) mindestens ein C₂-C₄-Alkylenglykol und
ii) mindestens ein C₂-C₄-Alkylencarbonat, wobei die Komponenten i) und ii) mindestens 90% der Lösungsmittelmischung ausmachen,
oder eine Mischung davon mit Wasser, mit der Maßgabe, dass das Gewichtsverhältnis von Wasser zu Lösungsmittelmischung SM nicht über 1:2 liegt,
c) mindestens ein Tensid S, umfassend mindestens ein nichtionisches Blockcopolymer P mit mindestens einer Polyethylenoxidgruppierung PEO und mindestens einer Polyethergruppierung PAO aus Wiederholungseinheiten, die sich von C₃-C₁₀-Alkylenoxiden und/oder Styroloxid ableiten;
wobei die Komponenten a), b) und c) mindestens 90% der Formulierung ausmachen.

2. Formulierung nach Anspruch 1, wobei es sich bei dem C₂-C₄-Alkylenglykol um Propandiol handelt und es sich bei dem C₂-C₄-Alkylencarbonat um Propylencarbonat handelt.

3. Formulierung nach Anspruch 1, wobei das Gewichtsverhältnis von C₂-C₄-Alkylenglykol zu C₂-C₄-Alkylen-carbonat 10:1 bis 1:10 beträgt.

4. Formulierung nach Anspruch 1, wobei das nichtionische Blockcopolymer mindestens 90 Gew.-%, bezogen auf die Gesamtmenge von Tensid, ausmacht.

5. Formulierung nach Anspruch 1, wobei das nichtionische Blockcopolymer P ein zahlenmittleres Molekulargewicht M_{N} im Bereich von 1000 bis 100.000 Dalton aufweist.

6. Formulierung nach einem der Ansprüche 1 bis 5, wobei das Gewichtsverhältnis von PEO-Gruppierungen zu PAO-Gruppierungen in dem nichtionischen Blockcopolymer im Bereich von 1:10 bis 10:1 liegt.

7. Formulierung nach einem der Ansprüche 1 bis 6, die die mindestens eine organische Pestizidverbindung C in einer Menge von 5 bis 50 Gew.-%, bezogen auf das Gesamtgewicht der Zusammensetzung, enthält.

8. Formulierung nach einem der Ansprüche 1 bis 7, die das nichtionische Tensid S in einer Menge von 10 bis 80 Gew.-%, bezogen auf das Gesamtgewicht der Zusammensetzung, enthält.

9. Formulierung nach einem der Ansprüche 1 bis 8, die die organische Lösungsmittelmischung SM in einer Menge von 10 bis 85 Gew.-%, bezogen auf das Gesamtgewicht der Zusammensetzung, enthält.

10. Formulierung nach einem der Ansprüche 1 bis 9, wobei das Gewichtsverhältnis von Tensid S zu organischer Pestizidverbindung C 0,6:1 bis 10:1 beträgt.

11. Formulierung nach einem der Ansprüche 1 bis 10, wobei die Pestizidverbindung C mindestens eine Insektizidverbindung umfasst.

12. Formulierung nach Anspruch 11, wobei die Insektizidverbindung C aus Verbindungen der Formel I 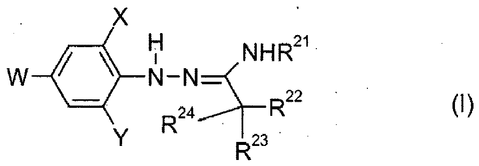 worin
W für Halogen oder C₁-C₂-Halogenalkyl steht;
X und Y jeweils unabhängig voneinander für Halogen stehen;
R²¹ für C₁-C₆-Alkyl, C₂-C₆-Alkenyl, C₂-C₆-Alkinyl, C₁-C₄-Alkoxy-C₁-C₄-Alkyl oder C₃-C₆-Cycloalkyl steht, wobei jede dieser Gruppen durch 1, 2, 3, 4 oder 5 Halogenatome substituiert sein kann;
R²² und R²³ für C₁-C₆-Alkyl stehen oder zusammen mit dem Kohlenstoffatom, an das sie gebunden sind, C₃-C₆-Cycloalkyl, das unsubstituiert oder durch 1 bis 3 Halogenatome substituiert sein kann, stehen;
R²⁴ für Wasserstoff oder C₁-C₆-Alkyl steht;
einschließlich der Enantiomere und Salze davon ausgewählt ist.

13. Formulierung nach Anspruch 11, wobei die Insektizidverbindung C aus Verbindungen der Formel II 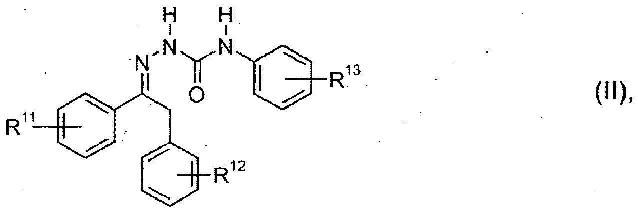 worin R¹¹ und R¹² jeweils unabhängig voneinander für Wasserstoff, Halogen, CN, C₁-C₄-Alkyl, C₁-C₄-Alkoxy, C₁-C₄-Halogenalkyl oder C₁-C₄-Halogenalkoxy stehen und R¹³ für C₁-C₄-Alkoxy, C₁-C₄-Halogenalkyl oder C₁-C₄-Halogenalkoxy steht,
ausgewählt ist.

14. Verwendung einer Formulierung nach einem der Ansprüche 1 bis 13 zum Pflanzenschutz.

15. Verfahren zum Bekämpfen von Organismen, die für Pflanzen schädlich sind, bei dem man die schädlichen Organismen, ihren Lebensraum, ihre Brutstätte, ihre Nahrungsquelle, ihre Pflanze, ihren Samen, ihren Boden, ihre Fläche, ihr Material oder ihre Umwelt, in der die schädlichen Organismen wachsen oder wachsen können, oder die Materialien, Pflanzen, Samen, Böden, Oberflächen oder Räume, die gegen Befall oder Verseuchung mit schädlichen Organismen zu schützen sind, mit einer wirksamen Menge einer durch Verdünnen einer Formulierung nach einem der Ansprüche 1 bis 13 mit Wasser erhaltenen wässrigen Zubereitung in Kontakt bringt.

## Revendications

1. Formulation de concentré liquide diluable dans l'eau d'un composé pesticide organique C ayant une solubilité dans l'eau non supérieure à 5 g/l à 25°C/1013 mbars, comprenant
a) au moins un composé pesticide organique C ayant une solubilité dans l'eau non supérieure à 5 g/l à 25°C/1013 mbars,
b) un mélange de solvants SM, comprenant
i) au moins un C₂-C₄-alkylène glycol, et
ii) au moins un carbonate de C₂-C₄-alkylène,
où les composants i) et ii) constituent au moins 90% du mélange de solvants,
ou un mélange de celui-ci avec de l'eau, à condition que le rapport pondéral de l'eau au mélange de solvants SM n'excède pas 1:2,
c) au moins un agent tensioactif S, qui comprend au moins un copolymère bloc non ionique P, comprenant au moins un motif d'oxyde de polyéthylène PEO et au moins un motif de polyéther PAO constitué de motifs répétitifs dérivés d'oxydes de C₃-C₁₀-alkylène et/ou d'oxyde de styrène ;
dans laquelle les composants a), b) et c) constituent au moins 90% de la formulation.

2. Formulation selon la revendication 1, dans laquelle le C₂-C₄-alkylène glycol est le propanediol et le carbonate de C₂-C₄-alkylène est le carbonate de propylène.

3. Formulation selon la revendication 1, dans laquelle le rapport pondéral du C₂-C₄-alkylène glycol au carbonate de C₂-C₄-alkylène va de 10:1 à 1:10.

4. Formulation selon la revendication 1, dans laquelle le copolymère bloc non ionique constitue au moins 90% en poids, sur la base de la quantité totale d'agent tensioactif.

5. Formulation selon la revendication 1, dans laquelle le copolymère bloc non ionique P possède un poids moléculaire moyen en nombre Mₙ allant de 1000 à 100 000 Daltons.

6. Formulation selon l'une quelconque des revendications 1 à 5, dans laquelle le rapport pondéral des motifs de PEO aux motifs de PAO dans le copolymère bloc non ionique va de 1:10 à 10:1.

7. Formulation selon l'une quelconque des revendications 1 à 6, contenant le au moins un composé pesticide organique C selon une quantité allant de 5 à 50% en poids, sur la base du poids total de la composition.

8. Formulation selon l'une quelconque des revendications 1 à 7, contenant l'agent tensioactif non ionique S selon une quantité allant de 10 à 80% en poids, sur la base du poids total de la composition.

9. Formulation selon l'une quelconque des revendications 1 à 8, contenant le mélange de solvants organiques SM selon une quantité allant de 10 à 85% en poids, sur la base du poids total de la composition.

10. Formulation selon l'une quelconque des revendications 1 à 9, dans laquelle le rapport pondéral de l'agent tensioactif S au composé pesticide organique C va de 0,6:1 à 10:1.

11. Formulation selon l'une quelconque des revendications 1 à 10, dans laquelle le composé pesticide C comprend au moins un composé insecticide.

12. Formulation selon la revendication 11, dans laquelle le composé insecticide C est choisi parmi les composés de formule I 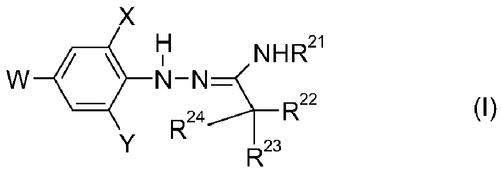 dans laquelle
W est halogène ou C₁-C₂-halogénoalkyle ;
X et Y sont chacun indépendamment halogène ;
R²¹ est C₁-C₆-alkyle, C₂-C₆-alcényle, C₂-C₆-alcynyle, C₁-C₄-alcoxy-C₁-C₄-alkyle ou C₃-C₆-cycloalkyle, chacun d'entre eux pouvant être substitué par 1, 2, 3, 4 ou 5 atomes d'halogène ;
R²² et R²³ sont C₁-C₆-alkyle ou peuvent former, conjointement avec l'atome de carbone auquel ils sont liés, C₃-C₆-cycloalkyle pouvant être non substitué ou substitué par de 1 à 3 atomes d'halogène ;
R²⁴ est hydrogène ou C₁-C₆-alkyle ;
y compris les énantiomères et les sels de ceux-ci.

13. Formulation selon la revendication 11, dans laquelle le composé insecticide C est choisi parmi les composés de formule II 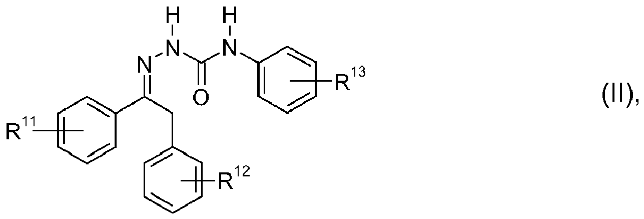 dans laquelle R¹¹ et R¹² sont chacun indépendamment hydrogène, halogène, CN, C₁-C₄-alkyle, C₁-C₄-alcoxy, C₁-C₄-halogénoalkyle ou C₁-C₄-halogénoalcoxy et R¹³ est C₁-C₄-alcoxy, C₁-C₄-halogénoalkyle ou C₁-C₄-halogénoalcoxy.

14. Utilisation d'une formulation selon l'une quelconque des revendications 1 à 13, pour la protection végétale.

15. Méthode de lutte contre des organismes qui sont nuisibles vis-à-vis de plantes, comprenant la mise en contact desdits organismes nuisibles, de leur habitat, de leurs lieux de reproduction, de leurs disponibilités alimentaires, des plantes, des semences, du sol, des zones, des matériaux ou de l'environnement dans lesquels les organismes nuisibles se développent ou peuvent se développer, ou les matériaux, les plantes, les semences, les sols, les surfaces ou les espaces à protéger contre une attaque ou une infestation par des organismes nuisibles, avec une quantité efficace d'une préparation aqueuse qui est obtenue par la dilution d'une formulation selon l'une quelconque des revendications 1 à 13 avec de l'eau.
